# EUROPEAN PATENT SPECIFICATION

(11) **EP 1 816 160 B1**
(45) Date of publication and mention of the grant of the patent: **22.12.2010**
(21) Application number: 07002600.0
(22) Date of filing: 07.02.2007
(51) Int. Cl.: C08L 27/06, C08L 1/00, C08L 97/02, C08K 3/04

(54) **Method of fabricating light-stabilized coloured wood-polymer composite materials suitable for structural members**
Herstellungverfahren für lichtstabilisierte farbige Holz-Polymer-Verbundwerkstoffe geeignet für Konstruktionslemente
Procédé de fabrication de matériaux composites de polymère et bois colorés photostabilisés appropriés pour les ensembles structurels

(30) Priority: 07.02.2006 GB 0602408
(43) Date of publication of application: 08.08.2007
(73) Proprietor: Deceuninck NV, 8830 Hooglede-Gits (BE)
(72) Inventor: Grymonprez, Wim, 8800 Roeselare (BE); Wallican, Luc, 8800 Roeselare (BE)
(74) Representative: Mooij, Johannes Jacobus

(56) References cited:
- EP-A- 1 623 809
- DATABASE WPI Week 200254 Derwent Publications Ltd., London, GB; AN 2002-503723 XP002436879 & JP 2002 114916 A (IRIS OHYAMA INC) 16 April 2002 (2002-04-16) & JP 2002 114916 A (IRIS OHYAMA INC) 16 April 2002 (2002-04-16)
- DATABASE WPI Week 200257 Derwent Publications Ltd., London, GB; AN 2002-532096 XP002436880 & JP 2002 138179 A (NIPPON ZEON KK) 14 May 2002 (2002-05-14) -& JP 2002 138179 A (NIPPON ZEON CO) 14 May 2002 (2002-05-14)

## Description

### Field of the invention

This invention relates to a method of fabricating a light-stabilized coloured polymer-wood composite material useful for making structural members, preferably for use in windows and doors for residential, industrial and commercial architecture. This invention also relates to processes for making structural members therefrom.

### Background of the invention

Wood, wood-polymer composites and metal components are commonly used in forming structural members, e.g. in conventional window and door manufacture. Commonly, residential windows are manufactured from milled wood products that are assembled with glass to form typically double hung or casement units. Wood windows while structurally sound, useful and well adapted for use in many residential installations, can deteriorate under certain circumstances, in particular weather conditions. Wood windows also require painting and other periodic maintenance. Wooden windows also suffer from cost problems related to the availability of suitable quality wood for construction and architecture. Clear wood products are slowly becoming more scarce and are becoming more expensive as demand increases. Metal components are often combined with glass and formed into single unit sliding windows. However metal windows typically suffer from substantial energy loss during the winter period.

In various areas of the world, various wood species remain highly appreciated and used for the construction of buildings or parts of buildings exposed to ambient atmosphere moisture, to precipitation and/or climatic variations of all kinds, namely to the effects of sun radiation. A lasting protection against these various natural building-wood deterioration factors therefore constitutes a first scale economic goal. In particular, the cost of maintenance and/or restoration of natural wood or wood-polymer composites mainly consists of manpower costs, and it is therefore important that maintenance may be spaced along periods of time as long as possible. Therefore there is an urgent need in the art for a process of making wood-polymer composite materials, the result of which being sufficiently long lasting so that a maintenance treatment may be repeated only at very much spaced intervals of time.

Extruded thermoplastic materials have been used in window and door manufacture. Filled and unfilled thermoplastic polymers have been extruded into useful seals, trim, coatings and other window construction components. Thermoplastic materials such as polyvinyl chloride have also been combined with wood members in manufacturing windows, e.g. in the form of plastic coatings or envelopes on wooden or other structural members. Generally, the cladding or coating technology used in making such windows involves extruding a thin polyvinyl chloride coating or envelope surrounding a wooden structural member. Polyvinyl chloride has also been combined with wood to make extruded composite materials. However, such composite materials cannot always successfully be used in the form of a structural member for the direct replacement of wood. Common wood-thermoplastic polymer composite materials are usually not able to provide thermal and structural properties similar to those of wood. When extruded, these materials fail to have sufficient modulus, compressive strength and thermal expansion coefficient in order to match wood as a direct replacement material. Furthermore, many extruded composites must be milled after extrusion to yield a final useful shape. Most commonly, polyvinyl chloride, polystyrene and polyethylene have been used in such products. EP-B-1,100,675 describes (table II) a foamed polymer composite building material made from a rigid PVC compound, hardwood flour, an acrylic modifier, a chemical blowing agent and 0.1 % by weight carbon black.

In addition to the above-mentioned problems, a growing trend appears in the aesthetics of modern architecture for using coloured structural elements having wood appearance together with a large variety of different colours. When these coloured structural elements are used outdoors, this architectural requirement brings additional constraints to the design, manufacture and maintenance of wood-polymer composite materials in terms of colour stability under various weather and ageing conditions, namely due to the influence of ultraviolet radiation from sun light and/or the influence of visible light, and in terms of possible migration of the colouring agent(s) throughout said coloured wood-polymer composite materials. In particular, the colour of coloured wood-polymer composite materials usually tends to become lighter or fade after exposure to ultraviolet radiation from sun light and/or to visible light during a certain period of time. This phenomenon may depend upon the kind of colouring agent(s) being incorporated into the wood-polymer composite materials but may, in extremely harsh weathering conditions or environment, result in complete fading, bleaching or whitening of the coloured wood-polymer composite material after some time. The kinetics of this phenomenon may also depend upon other parameters such as humidity, temperature, and the method of incorporation of the colouring agent(s) into the wood-polymer composite materials. In all cases the final result of this bleaching phenomenon largely appears to be commercially unacceptable.

WO 2005/097444 discloses a fibrous polymer composite material including an organic fibrous component in particulate form dispersed in a polymeric component in the form of a matrix, said fibrous particles being coloured by means of a colouring material which is impregnated therein. The impregnation with colouring material may be to a depth of at least 5 µm below the fibrous particle surface, typically 5 - 10 µm, unless the individual fibrous particles are so small that they are fully impregnated and saturated with colouring material. Such adequate depths of penetration of colouring material into the fibrous particles are achievable using a liquid spraying technique and a fibrous component/colouring material mass ratio (on a dry basis) from 200/1 to 30/1. The fibrous component/polymeric component mass ratio ranges from 1/9 to 4/1. WO 2005/097444 also teaches that extruding a pre-mix of such coloured fibrous particles (particle size in the range of 0.25 mm to 6 mm) and polyvinyl chloride with a particle size 1 - 3 µm together with usual ultra-violet inhibitor and other additives (lubricant, extrusion-enhancement chemicals, anti-oxidant, and impact modifier; amounts not specified) resulted in a composite material which retained its coloured appearance for extended periods of time, despite being subjected to sunlight and harsh weathering conditions or environment such as water.

However, it is known from the skilled person that when amorphous polyvinyl chloride is used as the polymeric component in such a composite material, incorporation of additives tend to decrease properties such as stiffness or impact resistance below an acceptable level. It is also known from the skilled person that finely divided polyvinyl chloride (e.g. with a particle size 1 - 3 µm) is expensive to produce, and consequently significantly increases the production cost of the final wood-composite material. Also, the liquid spraying technique used for impregnation of the colouring material results in increasing the moisture content of the fibrous component, and therefore requires an additional drying step in order to avoid problems during extrusion. Finally, it has been found that reproducing the teaching of WO 2005/097444, although providing some improvement in terms of weathering resistance over time, is still beyond the present commercial and technical requirements for architectural purposes.

It is also known in the art from JP-A-2002 114916 to produce a plant culture container, such as a flower pot, hardly suffering colour fading when exposed to daylight for a long time and being able to maintain for a long time a terra cotta or wood appearance by moulding a composition comprising a polypropylene resin, wood meal, carbon black and a red oxide pigment. However the skilled person knows that polyvinyl chloride has a different type of reaction with respect to ultra-violet light than polypropylene, and the skilled person additionally knows that polyvinyl chloride has a different type of interaction with pigments and dyes than polypropylene.

It is further known from JP-A-2002 138179 to provide a vinyl chloride resin composition added by a non-lead thermal stabilizer, and to provide its molding having excellent woody feeling, and hard to cause discoloring, by a vinyl chloride resin composition comprising 5 to 150 wt.% of wood flour, 0.5 to 5 wt. % of calcuim-zinc thermal stabilizer and 0.1 to 10 wt. % of oxide or vinyl chloride resin.

It is also known in the art that wood-polymer composite materials produced by moulding from polypropylene resins, such as the above-mentioned ornamental articles, do not exhibit the Young's modulus, compressive strength, and/or thermal expansion coefficient that are usually required from structural elements for architectural purposes such as window frames, door frames, walkways, flooring, decking, hollow boards or planks, solid boards or planks, decorative mouldings or extruded profiles, containers and container flooring, cargo pallets, cladding for building sides, gutters, fascias, children's playground equipment, outdoor furniture, dog kennels and the like.

Without wishing to be bound by theory, it seems that discoloration of a coloured wood-polymer composite material comprising a polyvinyl chloride component occurs at least at two different levels. First, colour radicals present in the lignin components of wood quickly degrade and react with polyvinyl chloride, thus causing further degradation of said polyvinyl chloride. Secondly, colour radicals, when absorbing ultraviolet radiation from sunlight show an auto-catalytic destructive effect and in this way cause withdrawal of free chlorine radicals which in turn cause fading, bleaching or whitening of the coloured wood-polymer composite material. In addition, such free chlorine radicals may also be produced during an extrusion or co-extrusion process used for making said wood-polymer composite material. Finally, the presence of residual water from the lignin component seems to produce an acceleration of the whitening, bleaching or fading process. Because the latter presumed mechanisms of degradation of in the coloured wood-polymer composite material are specific to the presence of a polyvinyl chloride component or to an extrusion production technique, they require specific counteracting measures that the skilled person cannot derive from the knowledge of coloured wood-polymer composite materials comprising a polypropylene or polyethylene component or from the knowledge of moulding production techniques.

There is a need in the art for producing in an economic way structural architectural members from wood and a vinyl chloride containing polymer, especially for indoor and outdoor use, being coloured and having wood appearance while withstanding sunlight and harsh weathering conditions or environment (such as water) for a long period of time. This need should be met without significantly reducing the strong mechanical characteristics (such as, but not limited to, Young's modulus, compressive strength, and/or thermal expansion coefficient) that are normally required from such structural members. This need should also be met without the complications of certain process steps, such as liquid impregnation, additional drying and the like, that constitute significant drawbacks of the prior art identified herein-above. This need should also be met without restricting the choice of the manufacturing technology, so as to be able to adapt the latter to economic requirements such as the number of parts to be produced in one series of structural architectural elements.

Because the handling of colouring agents and vinyl chloride containing polymers are likely to cause environmental problems unless appropriate precautions are taken, there is a also a need in the art for an environment friendly process of making coloured wood-polymer composite materials from a vinyl chloride containing polymer. It is also desirable that said coloured wood-polymer composite materials be further protected against the most various biologic degradation factors such as various species of insects and mushrooms. Another need to be met in the field of structural architectural elements with long term warranty is the absence of lasting modification of the mechanical properties and of the dimensional stability of the coloured wood-polymer composite material as a function of time.

Accordingly, a substantial need exists for a coloured wood-polymer composite material that can be made from a vinyl chloride containing polymer and wood particles with minimal changes to the method of manufacture, in particular extrusion or co-extrusion, with respect to making the corresponding non-coloured wood-polymer composite materials. A further need exists for a coloured wood-polymer composite material from a vinyl chloride containing polymer that can resist colour changes over time or at least that has a colour change kinetics significantly slower than that of existing composite materials whatever the relevant colour. A further need exists for a coloured wood-polymer composite material from a vinyl chloride containing polymer that shows a substantially uniform distribution of the colouring agent throughout the material, or at least a colouring agent distribution significantly more uniform than that of existing composite materials, whatever the relevant colour, in order to avoid an aesthetically unpleasant speckled appearance. These various needs require the development of a reliable and cost-effective method for incorporating a colouring agent into a wood-polymer composite material in such a way that any change in colour after prolonged exposure to ultraviolet irradiation e.g. from sun light and/or to visible light will be minimal and, preferably, also in such a way that the colouring agent distribution throughout said wood-polymer composite material is and remains substantially uniform or at least significantly more uniform over time than achieved by existing manufacturing processes.

### Summary of the invention

The present invention is based on a first unexpected finding that the colour stability, under various weather and ageing conditions, of a coloured wood-polymer composite material based on a vinyl chloride containing polymer and a porous material derived from cellulose and/or lignin (e.g. wood) wherein the colour imparted to said coloured composite material is other than a black colour resulting from a black pigment or dye, may be significantly improved by introducing a suitable amount of carbon black into the coloured wood-polymer composite material formulation. More specifically, a light-stabilized coloured polymer-wood composite material based on a vinyl chloride containing polymer phase and being useful for making structural members is obtained, according to the present invention, by providing:
(i) one or more colouring agents other than a black pigment or dye, and
(ii) carbon black
in suitable proportions into a formulation of said polymer phase and wood particles (e.g. wood sawdust). The light-stabilized coloured polymer-wood composite material of this invention may be easily produced by various methods, e.g. an extrusion, co-extrusion or injection process, all being well known in the art. Although this is not a requirement, said production methods may include the combination of a premix or master-batch including said one or more colouring agents other than a black pigment or dye and a premix or master-batch including said carbon black, optionally together with the remaining components (e.g. polymer phase and wood particles). In an equally suitable alternative, carbon black and the one or more colouring agents other than a black pigment or dye may be combined together, in suitable proportions to provide colour stability under long term weathering conditions to the final coloured wood-polymer composite material, in a single premix or master-batch which is then combined with the remaining components (e.g. polymer phase and wood particles).

A specific embodiment of the present invention is based on a second unexpected finding that a uniform distribution of carbon black and the one or more colouring agents other than a black pigment or dye in a light-stabilized coloured wood-polymer composite material based on a vinyl chloride containing polymer and on particles of a cellulose and/or lignin component, can be advantageously achieved by using one or more plasticizers of said vinyl chloride containing polymer as a vehicle or carrier for said colouring agents and/or said carbon black. This embodiment of the invention may especially take the form of a coloured master-batch (wherein colour is other than black) and/or a carbon black master-batch, or a premix or master-batch comprising both carbon black and one or more colouring agents other than a black pigment or dye, each said master-batch including a dispersing amount of one or more plasticizers for a vinyl chloride containing polymer, and being suitable for admixture with a vinyl chloride containing polymer and wood particles.

Another unexpected finding of this invention is that the uniformity of appearance of a light-stabilized coloured wood-polymer composite material may be significantly improved by appropriately selecting the ratio between the average particle size of the cellulose and/or lignin based component and the average particle size of the polymer phase component.

Another unexpected finding of this invention is that a uniform distribution of components, especially colouring agent(s) and carbon black, into a light-stabilized coloured wood-polymer composite material may be performed with minimal changes to the process parameters for making the composite, whatever the kind of process (injection, extrusion, or co-extrusion), and without adverse effects on the balance of properties, especially mechanical properties, of the resulting composite material.

Another unexpected finding of this invention is that the colour stability, under various weathering conditions, of a coloured wood-polymer composite material based on a vinyl chloride containing polymer wherein the colour imparted to said coloured composite material is other than black, may be significantly improved by introducing a suitable amount of carbon black into the coloured wood-polymer composite material formulation, and at the same time the mechanical properties of said coloured wood-polymer composite material can be maintained at a suitable level by appropriately selecting the particle size and/or the K value of said vinyl chloride containing polymer.

Yet another unexpected finding of this invention is that the colour stability, under various weathering conditions, of a coloured wood-polymer composite material based on a vinyl chloride containing polymer wherein the colour imparted to said coloured composite material is other than black, may be significantly improved by introducing a suitable amount of carbon black into the coloured wood-polymer composite material formulation, and additionally by appropriately selecting one or more of the respective weight ratios between the four main components of said polymer composite material, especially the respective proportions of carbon black to the other main components, and more particularly:
- the weight ratio between the cellulose and/or lignin component (e.g. wood) and carbon black, and/or
- the weight ratio between the polymer phase component (e.g. polyvinyl chloride) and carbon black.

One or more of the above unexpected findings may be combined at will for an optimal design of the composite formulation, depending upon the end-user requirements for the shaped article, e.g. structural architectural element, made from such formulation.

### Detailed description of the invention

In a first aspect, the present invention relates to a method of fabricating a light-stabilized colored wood-polymer composite material comprising:
(A) a cellulose and/or lignin based component,
(B) a polymer phase comprising a major amount of a vinyl chloride containing polymer, and
(C)one or more coloring agents other than a black pigment or dye,
(D) carbon black in carbon black in a weight ratio (C)/(D) from 2.5:1 to 10:1, **characterized in that** the composite material is brushed until 0.1 - 0.4 mm of the composite material disappeared and wherein the variation in the color index δE, measured according to standard ISO 7724, is below 6.0. The light-stabilized colored wood-polymer composite material of this invention may be porous or non porous, depending upon the presence or absence of a foaming agent in the above formulation, and the presence or absence of a foaming step in the manufacturing process.

The term " light stabilization ", as used herein, does not strictly refer to the color being kept constant but refers to a change in color which is minimal or at least significantly lower than the change in color obtained, for the same color and under the same weathering or ageing conditions, in the absence of the carbon black component (D). Light stability or color change of the colored wood-polymer composite material may be expressed for instance by one or more of the following parameters or characteristics:
- a change in the yellowness index, for instance as measured according to norm EN 513-1,
- a change δE in the color parameter E, for instance as measured according to standard ISO 7724.

In a preferred embodiment, the present invention relates to the method above wherein δE, measured according to standard ISO 7724, is below about 4.0. In a more preferred embodiment, the present invention relates to the method above wherein δE, measured according to standard ISO 7724, is below about 2.0. The level of light stabilization achieved, in particular the value achieved for δE as measured according to standard ISO 7724 mainly depends, for each particular coloring agent or combination of coloring agents other than a black pigment or dye, upon the respective proportions of components (C) and (D), i.e. on the weight ratio (C)/(D). It will be taken into account that the level of light stabilization achieved is not necessarily proportional to the carbon black proportion over the whole range of respective proportions (for instance light stabilization may reach an optimum at a certain carbon black proportion), and that the amount of carbon black (D) incorporated into the wood-polymer composite material of the invention should not be so high that the initial color is darkened excessively or beyond the end-user requirement. It has unexpectedly been found that a weight ratio (C)/(D) of at least about 2.5:1 constitutes an important feature of the invention. For most coloring agents, the desirable weight ratio (C)/(D) is from about 2.5 :1 to about 10 :1, preferably from 2.6:1 to 5:1, more preferably from 2.8:1 to 4:1, and may be adapted for each particular coloring agent or combination of coloring agents other than a black pigment or dye in view of the desired light stabilization and in view of the initial darkening effect that is tolerated.

Weight proportions of the coloring agents (C) and/or carbon black (D) in the wood-polymer composite material of the invention may be expressed with respect to the weight of the light-stabilized colored composite material or with respect to the sum of weights of the main components (A) and (B). Because the latter constitute by far the major part of the light-stabilized colored composite material, as will be seen from the following usual ranges (i.e. the cumulative weight proportion of (C) and (D) does not exceed about 8%), these alternative expressions do not significantly differ in practice.

Within a light-stabilized colored wood-polymer composite material of this invention, the respective proportions of carbon black to the other components may include a weight ratio (B)/(D) ranging within broad limits, in particular:
- a weight ratio (B)/(D) not above about 150:1, preferably not above about 120:1, more preferably not above about 100:1, most preferably not above about 60:1, and/or
- a weight ratio (B)/(D) not below about 30:1, preferably not below about 40:1.

Within a light-stabilized colored wood-polymer composite material of this invention, the respective proportions of carbon black to the other components may include a weight ratio (A)/(D) ranging within broad limits, in particular:
- a weight ratio (A)/(D) not above about 120:1, preferably not above about 100:1, more preferably not above about 80:1, and/or
- a weight ratio (A)/(D) not below about 30:1, preferably not below about 40:1.

Suitable amounts of the one or more coloring agents (C) are well known to those skilled in the art and mainly depend upon the intensity of color desired and upon the aesthetic effect to be provided. Conventionally, such amounts range from about 0.1 % to 5 % by weight, preferably from 0.5 to 3 % by weight, more preferably from 0.8 to 2 % by weight, of the light-stabilized colored wood-polymer composite material of the invention. A suitable amount of the carbon black (D) depends, among others, on :
- the ability of the coloring agents (C) to be degraded by ultraviolet irradiation, in particular after exposure to sun light, or visible light,
- the more or less pronounced color intensity provided by said coloring agents (C), and
- the level, in particular the duration or lasting action, of color protection against light, in particular ultraviolet light, that is desired.
Useful amounts of carbon black (D) range from about 0.15 % to about 2.5 % by weight, preferably from 0.25 to about 2 % by weight, more preferably from about 0.4 to about 1.5 % by weight, most preferably from about 0.5 to about 1.2 % by weight, of the light-stabilized colored wood-polymer composite material of the invention.

A critical feature of the polymer phase component (B) is that it is essentially thermoplastic, i.e. free from thermosetting polymers and from chemicals being able to form a thermosetting polymer *in situ.* Another critical feature of the polymer phase component (B) is that it comprises a major amount, e.g. at least 80% by weight and preferably at least 85% by weight, of a vinyl chloride containing polymer or copolymer. The preferred thermoplastic polymer used in the polymer phase (B) comprises polyvinyl chloride. Polyvinyl chloride is typically manufactured by the free radical polymerization of vinyl chloride resulting in a useful thermoplastic polymer. After polymerization, polyvinyl chloride is commonly combined with one or more additives such as thermal stabilizers, lubricants, plasticizers, fillers, biocides, processing aids, flame retardants. Vinyl chloride can also be combined with one or more other vinyl monomers in the manufacture of vinyl chloride copolymers. Such copolymers may be linear, branched, graft, random copolymers or block copolymers. Vinyl monomers that can be combined with vinyl chloride to form such vinyl chloride copolymers include acrylonitrile, α-olefins such as ethylene, propylene or 1-butene, chlorinated monomers such as vinylidene dichloride, acrylic monomers such as acrylic acid, methyl acrylate, ethyl acrylate, methyl methacrylate, acrylamide, hydroxyethyl acrylate, styrenic monomers such as styrene, α-methyl styrene, vinyl toluene, and vinyl acetate. Such vinyl co-monomers may be present in an amount of up to about 50 % by moles of the resulting vinyl chloride copolymer, the balance being vinyl chloride. Polymer blends or polymer alloys including a major amount of a vinyl chloride polymer or copolymer can also be useful in manufacturing the coloured wood-polymer composites of the invention. Such alloys typically comprise two or more miscible polymers or copolymers suitably blended to form a substantially uniform composition. A polymer alloy at equilibrium preferably comprises a mixture of two or more amorphous polymers existing as a single phase of intimately mixed segments of the two macromolecular components and exhibit a single, composition-dependent, glass transition temperature. Polyvinyl chloride forms a number of known polymer alloys that may also be used in the practice of this invention such as polyvinyl chloride/nitrile rubber, polyvinyl chloride/vinylidene dichloride copolymers, poly(vinyl chloride-*co*-α-methyl-styrene-*co*-acrylonitrile), polyvinyl chloride/polyethylene blends.

The primary requirement for the vinyl chloride containing polymer or copolymer to be used as a polymer phase (B) is that it retains sufficient thermoplastic properties to be able of melt blending with the cellulose and/or lignin based component (A) such as wood particles, and that the resulting melt blend material can be extruded or injection-moulded in a process for forming a rigid structural member. Suitable vinyl chloride polymers, copolymers and alloys are commercially available in a wide variety of grades from a number of manufacturers. Preferred polyvinyl chloride materials are polyvinyl chloride polymers with a number average molecular weight Mₙ from about 50,000 to about 150,000, more preferably from 80,000 to 100,000, and/or with a K value ranging from about 50 to about 70, more preferably from about 55 to about 65.

The polyvinyl chloride material used as a polymer phase (B) may optionally be modified by the introduction of pending groups being able to form hydrogen bonds with the cellulose hydroxyl groups of wood. As is well known to those skilled in the art, cellulose molecules contain secondary and/or primary hydroxyl groups that are available for hydrogen bonding. Said pending groups may be introduced by copolymerization of vinyl chloride with a second monomer having functional groups that are capable of forming hydrogen bonds with cellulose. The polyvinyl chloride polymer material may be modified either by grafting a reactive cellulose-compatible moiety onto the polyvinyl chloride backbone or by incorporating it, e.g. by copolymerization techniques, into the polymer backbone itself. Representative examples of monomers that can be included as one or more minor components (the total amounts of which should be less than 50 % by moles with respect to the whole copolymer) in a polyvinyl chloride copolymer include vinyl alcohol, maleic anhydride, glycidyl methacrylate, vinyl oxazolines, vinyl pyrrolidones, vinyl lactones. Such co-monomers, especially when present at the preferred concentrations of less than 10 % by moles, more preferably less than 5 % by moles, react covalently with cellulose hydroxyl groups and form associative bonds therewith, resulting in increased compatibility, but are not sufficiently reacted with vinyl chloride to result in a cross-linked or thermoset material. The polyvinyl chloride polymer material can be grafted with a variety of reactive compounds preferably having a primary or secondary nitrogen, an oxygen atom, or a carboxyl group, such as N-vinyl pyrrolidone, N-vinyl pyridine, N-vinyl pyrimidine, polyvinyl alcohol polymers, unsaturated fatty acids, acrylic acid, methacrylic acid, reactive acrylic oligomers, reactive amines, reactive amides. Any reactive or grafting species containing a hydrogen bonding atom is suitable as a graft reagent for this embodiment of the invention.

Although this is not a requirement of the invention, it is preferred that the polymer phase component (B) is introduced into the light-stabilised coloured composite material of the invention in the form of particles with a predetermined particle size and/or a predetermined particle size polydispersity (deviation from average) as follows:
- preferably the average particle size ranges from about 30 µm to about 300 µm, more preferably from about 120 µm to about 220 µm, most preferably from about 160 µm to about 200 µm;
- preferably the particle size polydispersity ranges from 1 to 1.5, more preferably from about 1.05 to about 1.2.

The thermoplastic vinyl chloride containing material used as a polymer phase (B) may also optionally be modified by including or blending with one or more additives capable of imparting certain desirable characteristics to the composite material of the invention. Such additives for instance may be one or more impact modifiers, e.g. an impact modifier based on one or more acrylic monomers, with the purpose of improving the impact strength of the composite material. Suitable impact modifiers of this type, as well as the amount to be included into the thermoplastic material, are well known in the art. Examples thereof include polymers and copolymers of acrylic monomers such as acrylic and methacrylic acid, acrylic and methacrylic esters, acrylic and methacrylic amides and alkaline salts thereof, in particular polymethylmethacrylate, block copolymers of acrylates and other ethylenically mono-unsaturated or poly-unsaturated monomers such as styrene, butadiene. An impact-modifying amount of such polymers is usually within a range from about 1 % to 15 % by weight of the polyvinyl chloride thermoplastic material.

Other additives that may be present together with the thermoplastic vinyl chloride containing material used as a polymer phase (B) include inorganic fillers such as calcium carbonate, fire retardants, heat stabilisers, smoke retardants, extrusion aids.

The one or more coloring agents (C) are a critical component of the light-stabilized colored wood-composite material of this invention. They may be suitably selected from the group consisting of inorganic pigments and organic dyes. Preferably for outdoor applications, the latter should be selected in order to exhibit a substantial UV-light stability. Suitable inorganic pigments may suitably be selected from the group consisting of metallic compounds, wherein the term " metallic compound " refers to a compound of a metal ion and one or more atoms or groups of atoms, e.g. in the form of ionic bonds and/or ionic complexes. Such metallic compounds may be selected from a very wide range of species. In particular, it may be selected from the group consisting of metal oxides, metal hydroxides, metal sulfides, metal selenides, metal tellurides and combinations thereof, wherein the metal may belong to any of groups 1 to 15 of the Periodic Table. Suitable examples include zinc oxide, zinc hydroxide, calcium hydroxide, iron oxide, aluminium oxide, titanium dioxide, magnesium oxide, manganese oxide, zirconium oxide, nickel hydroxide, vanadium oxide, silver vanadium oxide, including various crystallographic forms thereof (for instance, iron oxide may be present either in its spherical red form or in its prismatic yellow form). The metallic compound may also be selected from metal organic or inorganic salts or metal complex salts. Suitable examples include carbonates, percarbonates, perthiocarbonates, perdicarbonates, perphosphates, perdiphosphates, pergermanates, rhenates, perrhenates, ruthenates, perruthenates, tantalates, pertantalates, technetates, pertechnetates, sulfates, thiosulfates, thiotellurates, sulfites, sulfonates, persulfates, carbides, hydrides, borates, perborates, borohydrides, borosilicates, borotitanates, borotungstates, perchromates, silicates, aluminates, nitrates, nitrites, perazotates, arsenites, arseniates, perarseniates, bromates, bromites, iodates, periodates, iodites, periodohexatungstates, manganates, permanganates, molybdates, permolybdates, perthiomolybdates, vanadates, perthiovanadates, titanates, pertitanates, zirconates, chromates, ferrates, ferricyanates, ferrioxalates, ferrocyanates, ferrofulminates, cobaltocyanates, nickelates, nickelotungstates, platinates, uranates, peruranates, perosmiates, chlorates, perchlorates and chlorites of one or more metals of any of groups 1 to 15 of the Periodic Table. Suitable examples of such inorganic salts include calcium carbonate, calcium sulphate, molybdenum carbide, tungsten carbide.

Suitable organic dyes include phtalocyanines and, with respect to composite materials intended for outdoor applications, are more particularly restricted to those which can withstand UV light for a long period of time. Whether organic or inorganic, the one or more coloring agents (C) are preferably used in the form of particles with an average particle size from about to about 10 µm to about 100 µm.

Whether organic or inorganic, the one or more coloring agents (C) may preferably absorb visible light at a wavelength below 625 nm.

In a specific embodiment of the present invention the one or more coloring agents (C) are selected from the group consisting of inorganic pigments and organic dyes as listed herein-above, provided that said inorganic pigment is not titanium oxide.

The carbon black (D) is also a critical component of the light-stabilized coloured wood-composite material of this invention. Carbon black is preferably used in the form of a powder having an average particle size from about 10 nm to about 100 nm, i.e. significantly smaller, preferably at least about 100 times smaller than the average particle size of the one or more coloring agents (C).

The cellulose and/or lignin based component (A) is also a critical component of the light-stabilized colored wood-composite material of this invention. Wood is the most common example of such a component (A). Preferably, wood is used in the form of particles with a selected size which, depending on the commercial source, may be named sawdust or " wood fibres ". Wood fibre can be derived from either soft woods or evergreens or hard woods commonly known as broad leaf deciduous trees. Soft woods are generally preferred for fibre manufacture because the resulting fibres are longer, contain high percentages of lignin and lower percentages of hemicellulose than hard woods. While soft wood is the primary source of fibre for this invention, additional fibre make-up can be derived from a number of secondary sources including natural fibres including bamboo, rice, sugar cane, and recycled or reclaimed fibre from newspapers, boxes, computer printouts. However, the primary source for wood fibre of this invention comprises the wood fibre by-product of milling soft woods commonly known as sawdust or milling tailings. Such wood fibre advantageously has a regular reproducible shape and aspect ratio. The fibres, based on a random selection of about 100 fibres, preferably have an aspect ratio from about 1 to 5, more preferably from about 1 to 2, and more preferably from about 1 to 1.5. The preferred fibre for use in this invention are fibres derived from processes common in the manufacture of windows and doors. First, wooden members are commonly ripped or sawed to size in a cross grain direction to form appropriate lengths and widths of wood materials. The by-product of such sawing operations is a substantial quantity of sawdust. In shaping a regular shaped piece of wood into a useful milled shape, wood is commonly passed through a machine which selectively removes wood from the piece leaving the useful shape. Such milling operations produces substantial quantities of shaving sawdust or mill tailing by-products. Lastly, when shaped materials are cut to size and mitred joints, butt joints, overlapping joints, tail joints are manufactured from pre-shaped wooden members, substantial trim is produced. Such large trim pieces are commonly machined to convert the larger objects to wood fibre having dimensions approximating sawdust or mill tailing dimensions. The wood fibre sources of the invention can be blended regardless of particle size and used to make the composite. The fibre stream can be pre-sized to a preferred range or can be sized after blending. The size of wood particles to be used in this invention is not a critical parameter, provided that it is suitable for hot extrusion under standard conditions. Usually, such wood particles are selected from the group consisting of wood dust with an average particle size from about 25 µm to 250 µm, wood flower with an average particle size from 250 µm to 750 µm, and wood chips with an average particle size from 750 µm to about 2.0 mm. Each of these size ranges may be combined with each of the aspect ratio ranges specified above. Preferred wood particles have an average size from about 100 µm to 300 µm and an aspect ratio from 1 to 1.5.

Although this is not a requirement of the invention it is preferred, especially with respect to the ease of manufacture and the uniformity of aspect of the coloured wood-composite material, and structural elements produced therefrom, that the ratio between the average particle size of the cellulose and/or lignin based component (A) and the average particle size of the polymer phase component (B) is not above 3:1, more preferably not above about 2.0, most preferably not above about 1.5. For the same reasons, it is preferred that the same ratio is not below 0.5:1, more preferably not below 0.7:1.

In a particular embodiment of the invention, the cellulose and/or lignin based component (A), e.g. wood particles, represents from about 30 to 60 % by weight, preferably from 35 to 50 % by weight, of the light-stabilized coloured wood-polymer composite material, whereas the thermoplastic polymer phase (B) represents from about 40 to 70 % by weight, preferably from 50 to 65 % by weight, of said light-stabilized coloured wood-polymer composite material.

In another specific embodiment of the present invention, the light-stabilized colored wood-polymer consists essentially of:
(A) a cellulose and/or lignin based component,
(B) a polymer phase comprising a major amount of a vinyl chloride containing polymer,
(C) one or more coloring agents other than a black pigment or dye, and
(D) carbon black in respective proportions suitable to provide light stabilization of said colored wood-polymer composite material, such as a weight ratio (C)/(D) from 2.5:1 to 10:1.

When one or more of the above critical features, especially one or more of the preferred features of the invention are met, light-stabilized colored wood-polymer composite materials with strong mechanical characteristics, e.g. a Young modulus from about 4,000 MPa to about 6,500 Mpa, preferably from about 5,000 MPa to about 6,000 Mpa, can easily be achieved.

In a second aspect the present invention relates to methods and processes for making a light-stabilized colored wood-polymer composite material. Said methods and processes have in common the combination, in one or more steps, of :
(A) a cellulose and/or lignin based component,
(B) a polymer phase component comprising a major amount of a vinyl chloride containing polymer,
(C)one or more coloring agents other than a black pigment or dye, and
(D) carbon black in respective proportions to the other components such as to provide light stabilization of said colored wood-polymer composite material such as a weight ratio (C)/(D) from 2.5:1 to 10:1.

In one specific embodiment of the method, the one or more coloring agents (C) are other than titanium dioxide.

The process of manufacture of the invention may be performed by injection, extrusion or co-extrusion such as in a twin-screw extruder. When extrusion is selected, the following extrusion parameters are of importance:
- an extrusion temperature preferably between about 150°C and about 220°C, more preferably between about 160°C and about 200°C; and
- a pressure preferably between about 80 bars and about 220 bars, more preferably between about 100 bars and about 200 bars.

In view of making structural members, preferably for use in windows and doors for residential, industrial and commercial architecture, said methods and processes also have in common a preliminary step of drying the cellulose and/or lignin based component (A), e.g. wood particles, until the water content thereof is below about 1.5 % by weight, preferably below about 1 % by weight, more preferably below 0.8 % by weight. This means a significant level of drying is required since, depending upon factors such as relative humidity and season, trees typically have a water content between about 10 % and 30 % by weight. Drying in this first step of the process of the invention may be effected by any means known in the art, i.e. with or without the application of vacuum, and using standard drying equipment known to the skilled person.

The combination of the four critical ingredients of the light-stabilized colored wood-polymer composite material of this invention may be achieved in different ways, however it preferably involves the use of one or more master-batches including the one or more coloring agents (C) other than a black pigment or dye, and/or the carbon black (D). each master-batch is preferably based on the thermoplastic polymer phase (B) but may also include a certain amount of the cellulose and/or lignin based component (A). The number of steps to be used in the process, i.e. the number of master-batches to be combined step by step, depends upon factors such as the average particle size of each ingredient, the monodispersity or polydispersity of the particle size distribution of each ingredient, the miscibility of (C) or (D) into the thermoplastic polymer phase (B), and the like. Depending upon the quality grade available for each ingredient, the skilled person in polymer processing will be able to determine the optimum process conditions.

A useful embodiment of the process of manufacture of the invention comprises the steps of :
(a) providing a premix of one or more coloring agents (C),
(b) providing a premix of a cellulose and/or lignin based component (A) and a polymer phase component (B),
(c) providing a premix of carbon black,
(d) feeding each premix provided in steps (a) to (c) to an extruder,
(e) operating said extruder at a pressure between about 80 bars and about 220 bars and a temperature between about 150°C and 220°C until an extrudate of a light-stabilized colored wood-polymer composite material is obtained.

In a particular embodiment, the process of the invention includes a step of combining a dried cellulose and/or lignin based component (A), e.g. dried wood particles, together with a master-batch comprising :
- the one or more coloring agents (C) and/or carbon black (D), and
- one or more liquid plasticizers (E) for the thermoplastic polymer phase (B), said one or more liquid plasticizers being able to dissolve or disperse said one or more coloring agents (C) and/or carbon black (D) and being able to be at least partially absorbed by said dried cellulose and/or lignin based component (A), e.g. said dried wood particles.

In this embodiment, the master-batch may further comprise the polymer phase (B). Preferably the proportions of the thermoplastic polymer phase and the master-batch comprising the one or more liquid plasticizers (E) and the one or more coloring agents (C) and/or carbon black (D) are such that upon combination of all components, a light-stabilized colored wood-polymer composite material with substantially uniform distribution of said one or more coloring agents (C) is obtained. The type of distribution of the coloring agents (C) and/or carbon black (D) in the final wood-polymer composite material of the invention may be qualitatively controlled visually and may also be quantitatively be ascertained by analytical techniques known in the art such as image analysis.

Thus the combination step of the invention may proceed by directly combining dried wood particles and a multi-components master-batch including the thermoplastic polymer phase, the one or more coloring agents (C) and/or carbon black (D) and optionally the one or more liquid plasticizers (E) for said thermoplastic polymer phase (B), or in two subsequent sub-steps of (a) first preparing a multi-components master-batch comprising one or more coloring agents (C) and/or carbon black (D) and optionally one or more liquid plasticizers (E), and then (b) combining said two- or three-components master-batch, said dried wood particles (A) and said thermoplastic polymer phase (B).

The plasticizer for the thermoplastic polymer phase (B) is an important aspect of this particular embodiment of this invention. It may be suitably selected from the group consisting of dialkyl phtalates, e.g. wherein each alkyl group has from 4 to 18 carbon atoms and may be straight or branched, preferably wherein alkyl is n-butyl, isobutyl, n-hexyl, n-octyl, n-decyl. More specific examples thereof include dibutylphtalate, dioctylphtalate and mixtures thereof.

In another particular embodiment of the invention, a master-batch may further optionally comprise effective amounts of one or more UV light stabilizers other than carbon black. They may be selected according to the knowledge of the skilled person and should be incorporated into the master-batch in the usual amounts for such additives.

In another particular embodiment of the invention, a master-batch may further optionally comprise one or more biocides, e.g. one or more anti-fungal agents, bactericides, anti-microbial agents. The latter may be suitably selected depending upon parameters such as their compatibility with the other master-batch components, temperature stability, environmentally acceptable degradation. Suitable examples thereof include isothiazolinones (e.g. 2-methyl-4,5-trimethyleneisothiazolin-3-one), dithio-2,2'-bis(benzmethylamide), organo-bromine and organo-iodine compounds, thiocyanates, dithiocarbamates, formaldehyde-release agents and mercuric compounds.

In another particular embodiment, the process of manufacture of the invention may comprise additional steps such as
- a step of shaping the light-stabilized colored wood-polymer composite material obtained after combination of components (A) to (D), and optionally (E), into a structural architectural element of the desired shape;
- a step of brushing the light-stabilized colored wood-polymer composite material obtained after combination of components (A) to (D), and optionally (E), or a structural architectural element shaped therefrom.

It has interestingly been found that a brushing step performed onto a shaped article made from a light-stabilized colored wood-polymer composite material of this invention may significantly contribute to a long term stability in the appearance of this shaped article by immediately resulting in a moderate and controlled whitening or bleaching of the material, after which the ill-defined discoloration of the material due to weathering conditions including humidity and ultra-violet light is significantly slown down by comparison with the non-brushed corresponding composite material.

Finally, a master-batch comprising two or more of:
- one or more coloring agents (C),
- carbon black (D),
- a vinyl chloride containing polymer phase (B), and
- optionally one or more liquid plasticizers (E) for said thermoplastic polymer phase (B), may be used
for the manufacture of the colored wood-polymer composite material of claim 6 based on said vinyl chloride containing polymer phase (B) and on a cellulose and/or lignin based component (A), e.g. wood particles. Advantageously such use permits obtaining a colored wood-polymer composite material with a substantially uniform distribution of said one or more coloring agents (C) and at the same time with improved light stability with respect to the corresponding wood-polymer composite material lacking carbon black.

The light stabilized coloured wood-composite materials of the invention can be used in a number of applications, *inter alia* to manufacture structural components such as window frames, door frames, walkways, flooring, decking, hollow boards or planks, solid boards or planks, decorative mouldings or extruded profiles, containers and container flooring, cargo pallets, cladding for building sides, gutters, fascias, children's playground equipment, outdoor furniture, dog kennels, rails, jambs, stiles, sills, tracks, stop and sash, and non-structural trim elements such as grid, cove, bead, quarter round, all of them being especially suitable for long-term outdoor use. Thus the invention meets the market requirements for a coloured composite material with substantially the same mechanical characteristics as the corresponding non-coloured composite material, with the aesthetic appearance required for modern architecture and with an improved light stability, therefore without a need for substantial maintenance over time.

The following examples are given for the purpose of illustration.

### EXAMPLES 1 to 3

An extruder Fiberex T 58 with a Crammer feeder is used to combine, at an operating temperature of 170°C :
- a first master batch commercially available under the trade name Twinson and comprising carbon black from Polyone dispersed in a 1:1 (weight ratio) mixture of resinous wood (e.g. pinewood) particles with an average particle size from 250 µm to 750 µm and a hard polyvinyl chloride polymer with a K value of 57, and
- a second master batch comprising a pigment other than carbon black, commercially available from BASF (Ludwigshafen, Germany) under the trade name Sicovinyl ; three different colours were tested, as follows : Sicovinyl Brown 27 identified as example 1 in the following table, Sicovinyl Red 41 identified as example 2, and Sicovinyl Red 44 identified as example 3.

The respective proportions of the first and second master batches were such that each pigment present in the second master batch was tested in an amount of 3 % by weight with respect to the total composition and that carbon black present in the first master batch was tested in an amount of 1 % by weight with respect to the total composition.

This composition was extruded at a rotating speed of 18 rpm and a linear speed of 1 m per minute into a structural member with a rectangular hollow shape, with dimensions of 150 mm x 30 mm and with a wall thickness of 5 mm at a length of 1 m to 6 m. Processing did not give rise to any production problem.

Evaluation of the light stability of the extruded structural member over time was effected in accordance with standards EN 513-1 and ISO 7724 by measuring the following colouring parameters, immediately after production and after light exposure (lamp type used: Atlas Xenon Burner Tube 6,500 watt) during 250 hours:
- colour index value along the white-black axis " L",
- colour index value along the red-green axis " a", and
- colour index value along the blue-yellow axis " b "

The table below indicates the value δE calculated by the following well known equation : δE = √(δL)² + (δa)² + (δb)² after 250 hours.

### EXAMPLE 4

An extruder Fiberex T 58 with a Crammer feeder is used to combine, at an operating temperature of 170°C :
- a 1:1 (weight ratio) mixture of resinous wood (e.g. pinewood) particles with an average particle size from 250 µm to 750 µm and a hard polyvinyl chloride polymer with a K value of 57, said mixture being commercially available under the trade name " premix Beologic 50/50 ", and
- a master batch comprising carbon black commercially available from Polyone under the trade name RAL 9005 and a pigment other than carbon black, commercially available from Polyone under the trade name RAL 3000 (red pigment identified as example 4 in the following table), RAL 6018 (green pigment), or RAL 5015 (blue pigment).

The respective proportions of the wood/PVC mixture and the master batch were such that carbon black and pigment present in the master batch were tested in the amounts by weight (calculated on the basis of the total composition) indicated in table 1 below.

Each composition was extruded at a rotating speed of 18 rpm and a linear speed of 1 m per minute into a structural member with a rectangular hollow shape, with dimensions of 150 mm x 30 mm and with a wall thickness of 5 mm at a length of 1 m to 6 m. Processing did not give rise to any production problem.

Evaluation of the light stability of the extruded structural member over time was effected in accordance with standards EN 513-1 and ISO 7724 by measuring the following coloring parameters, immediately after production, and after light exposure (lamp type used: Atlas Xenon Burner Tube 6,500 watt) during 250 hours:
- color index value along the white-black axis " L ",
- color index value along the red-green axis "a ", and
- color index value along the blue-yellow axis " b ".

Table 1 below indicates the value δE calculated by the following well known equation : δE = √(δL)² + (δa)² + (δb)² after 250 hours.

**TABLE 1**

| Example | Carbon black % | Pigment % | δE (250 h) |
|---|---|---|---|
| 1 | 1 | 3 | 29.58 |
| 2 | 1 | 3 | 15.17 |
| 3 | 1 | 3 | 16.97 |
| 4 | 1 | 2.6 | 20.50 |

Discoloration testing was discontinued after 250 hours.

### EXAMPLES 5 to 10

The procedure of examples 1 to 4 was repeated, except that extrusion was followed by brushing the resulting composite material by means of an inline brushing system commercially available from Wöhler (brushing speed was 190 m/minute linear in direction and/or in reverse-direction using galvanize steal wire brushes). Material disappeared with 0.1 - 0.4 mm as a result of pressure.

Evaluation of the light stability of the extruded and brushed structural member over time was effected in accordance with standards EN 513-1 and ISO 7724 after light exposure (lamp type used: Atlas Xenon Burner Tube 6,500 watt) during the period of time specified in table 2 below, i.e. after 250 hours, 500 hours and 1,000 hours respectively. Table 2 below indicates the value δE calculated after the respective periods of time.

**TABLE 2**

| Example | Carbon black % | Pigment % | δE 250 h | δE 500 h | δE 1000 h |
|---|---|---|---|---|---|
| 5 | 1 | 3 | 1.19 | 1.04 | 1.94 |
| 6 | 1 | 3 | 1.07 | 1.18 | 1.20 |
| 7 | 1 | 3 | 2.21 | 2.49 | 2.89 |
| 8 | 1 | 2.6 | 2.78 | 3.00 | 6.53 |
| 9 | 0.5 | 1.8 | 3.15 | 3.78 | 4.13 |
| 10 | 0.5 | 1.8 | 4.42 | 4.81 | 4.93 |

Taking into account the precision of each measurement and its incidence on the calculated value δE, the data obtained show that no significant change of color occurred after 1000 hours exposure to such a lamp.

## Claims

1. Method of fabricating a light-stabilized colored wood-polymer composite material comprising :
(A) a cellulose and/or lignin based component,
(B) a polymer phase component comprising a major amount of a vinyl chloride containing polymer, and
(C) one or more coloring agents other than a black pigment or dye,
(D) carbon black in a weight ratio (C)/(D) from 2.5:1 to 10:1, **characterized in that** the composite material is brushed until 0.1 - 0.4 mm of the composite material disappears and wherein the variation in the color index δE in said composite material, as measured according to standard ISO 7724, is below 6.5.

2. A method according to claim 1, wherein the amount of the one or more coloring agents (C) ranges from 0.1 % to 5 % by weight of the light-stabilized colored wood-polymer composite material.

3. A method according to any of claims 1 to 2, wherein the amount of carbon black (D) ranges from 0.3 to 1.5 % by weight of the light-stabilized colored wood-polymer composite material.

4. A method according to any of claims 1 to 3, wherein said polymer phase component (B) in said composite material is in the form of particles with a particle size polydispersity from 1 to 1.2.

5. A method according to any of claims 1 to 4, wherein said cellulose and/or lignin based component (A) in said composite material is in the form of wood fibres with an aspect ratio from 1 to 1:5.

6. A method according to any of claims 1 to 5, further comprising one or more liquid plasticizers (E) for the polymer phase component (B).

7. A method according to any of claims 1 to 6, wherein one or more coloring agents (C) absorb light at a wavelength below 625 nm.

## Patentansprüche

1. Herstellungsverfahren für einen lichtstabilisierten farbigen Holz-Polymer-Verbundwerkstoff, das umfasst:
(A) eine Komponente auf Zellulose- und/oder Ligninbasis,
(B) eine Komponente auf Polymerbasis, die eine größere Menge vinylchloridhaltiges Polymer umfasst und
(C) ein oder mehrere Farbmittel anders als schwarzes Pigment oder Farbe,
(D) Carbon Black (Ruß) in einem Gewichtsverhältnis (C)/(D) von 2,5:1 bis 10:1, **dadurch gekennzeichnet, dass** der Verbundwerkstoff gebürstet wird bis 0,1 - 0,4 mm des Verbundwerkstoffs abgetragen sind und worin die Abweichung im Farbindex δE in besagtem Verbundwerkstoff, nach ISO-Norm 7724 gemessen, unter 6,5 liegt.

2. Ein Verfahren nach Anspruch 1, worin die Menge der ein oder mehreren Farbmittel (C) zwischen 0,1 und 5 Gewichtsprozent des lichtstabilisierten farbigen Holz-Polymer-Verbundwerkstoffs liegt.

3. Ein Verfahren nach einem der Ansprüche 1 bis 2, worin die Menge Carbon Black (D) zwischen 0,3 und 1,5 Gewichtsprozent des lichtstabilisierten farbigen Holz-Polymer-Verbundwerkstoffs liegt.

4. Ein Verfahren nach einem der Ansprüche 1 bis 3, worin besagte Komponente auf Polymerbasis (B) in besagtem Verbundwerkstoff in der Form von Teilchen mit einer Polydispersität in der Teilchengröße zwischen 1 und 1,2 liegt.

5. Ein Verfahren nach einem der Ansprüche 1 bis 4, worin besagte Komponente auf Zellulose- und/oder Ligninbasis (A) in besagtem Verbundwerkstoff in der Form von Holzfasern in einem Längenverhältnis zwischen 1 und 1:5 vorliegt.

6. Ein Verfahren nach einem der Ansprüche 1 bis 5, das ferner einen oder mehrere Plastifikatoren in flüssiger Form (E) für die Komponente auf Polymerbasis (B) umfasst.

7. Ein Verfahren nach einem der Ansprüche 1 bis 6, worin ein oder mehrere Farbmittel (C) Licht mit einer Wellenlänge unter 625 nm absorbieren.

## Revendications

1. Procédé de fabrication d'un matériau composite bois-polymère coloré photostabilisé comprenant :
(A) un composant à base de cellulose et/ou de lignine ;
(B) un composant à phase polymère comprenant une quantité importante d'un polymère contenant du chlorure de vinyle, et
(C) un ou plusieurs agents colorants autres qu'un pigment ou une teinture noir(e),
(D) du noir de carbone dans un rapport pondéral (C)/(D) de 2,5:1 à 10:1, **caractérisé en ce que** l'on brosse le matériau composite jusqu'à ce que 0,1-0,4 mm du matériau composite disparaisse et étant entendu que la variation de l'écart colorimétrique δE dans ledit matériau composite, telle que mesurée selon la norme ISO 7724, est inférieure à 6,5.

2. Procédé selon la revendication 1, dans lequel la quantité d'un ou de plusieurs des agents colorants (C) va de 0,1 % à 5 % en poids du matériau composite bois-polymère coloré photostabilisé.

3. Procédé selon l'une quelconque des revendications 1 à 2, dans lequel la quantité de noir de carbone (D) va de 0,3 à 1,5 % en poids du matériau composite bois-polymère coloré photostabilisé.

4. Procédé selon l'une quelconque des revendications 1 à 3, dans lequel ledit composant à phase polymère (B) dudit matériau composite est sous la forme de particules ayant une polydispersité granulométrique allant de 1 à 1,2.

5. Procédé selon l'une quelconque des revendications 1 à 4, dans lequel ledit composant à base de cellulose et/ou de lignine (A) dudit matériau composite est sous la forme de fibres de bois ayant un rapport des côtés allant de 1 à 1:5.

6. Procédé selon l'une quelconque des revendications 1 à 5, comprenant par ailleurs un ou plusieurs plastifiants liquides (E) pour le composant à phase polymérique (B).

7. Procédé selon l'une quelconque des revendications 1 à 6, dans lequel un ou plusieurs agents colorants (C) absorbent la lumière à une longueur d'onde inférieure à 625 nm.
